# EUROPÄISCHE PATENTSCHRIFT

(11) **EP 1 193 657 B1**
(45) Veröffentlichungstag und Bekanntmachung des Hinweises auf die Patenterteilung: **03.11.2004**
(21) Anmeldenummer: 01120217.3
(22) Anmeldetag: 23.08.2001
(51) Int. Cl.: G07F 7/08

(54) **Elektronisches Zahlungssystem mit hoher Sicherheit**
High security electronic payment system
Système de paiement électronique de haute securité

(30) Priorität: 22.09.2000 DE 10048642
(43) Veröffentlichungstag der Anmeldung: 03.04.2002
(73) Patentinhaber: Deutsche Telekom AG, 53113 Bonn (DE)
(72) Erfinder: Merkel, Helmut, 76473 Iffezheim (DE); Wieland, Reinhold, 76474 Au am Rhein (DE)

(56) Entgegenhaltungen:
- EP-A- 0 605 070
- EP-A- 0 935 178
- EP-A- 0 945 817
- EP-A- 1 014 232
- DE-U- 29 801 806
- DE-U- 29 805 038
- GB-A- 1 582 989
- US-A- 5 241 161
- US-A- 5 859 419
- RANKL UND EFFING: "HANDBUCH der CHIPKARTEN" 1995 , HANSER , GERMANY XP002179988 * Seite 212 - Seite 214 *

## Beschreibung

Die Erfindung betrifft ein elektronisches Zahlungssystem, bei dem mittels elektronischer Geldbörse und Terminals für den Lade- und Bezahlvorgang der bargeldlosen Zahlungsverkehr abgewickelt wird.

### Stand der Technik

Elektronische Geldbörsen werden heute in der Regel in Form von kontaktbehafteten Chipkarten realisiert.

Die Aufladung dieser elektronischen Geldbörsen erfolgt PIN - geschützt an Ladeterminals, wobei der Geldbetrag in der Chipkarte gespeichert wird. Die Chipkarte kann an Akzeptanzterminals als Zahlungsmittel eingesetzt werden, zum Abbuchen ist keine PIN-Eingabe erforderlich.

Diese Funktionen in der Chipkarte übernimmt ein Mikrocontroller, der nach Einstecken der Chipkarte in ein Lade- oder Entladeterminal durch Anlegen der Versorgungsspannung aktiviert wird. Kryptografisch gesicherte Kommandos erhöhen bzw. verkleinern den im Mikrocontroller gespeicherten Geldbetrag. Aus den Kommandodaten wird ein kryptografisch gesicherter Buchungsdatensatz generiert, der zur Verrechnung an ein Hintergrundsystem geschickt wird.
Dieser Mikrocontroller hat eine relativ große Chipfläche. Dadurch besteht die Gefahr, dass bei mechanischer Beanspruchung der Karte der Chip bricht.

Da die Chipkarte über keine eigene Spannungsversorgung verfügt, müssen alle veränderbaren Daten, die der Mikrocontroller für diese Anwendung benötigt, nichtflüchtig im EEPROM gespeichert werden, also auch geheime Daten wie z.B. Sicherheitsschlüssel.

Da die Sicherheit einer Anwendung im Wesentlichen auf die Geheimhaltung dieser Schlüssel beruht, muss sichergestellt sein, dass das Ausspähen dieser Dateninhalte nicht möglich ist. Es bieten sich allerdings vielfältige Angriffsmöglichkeiten, da der Mikrocontroller extern mit Spannung versorgt wird, und die chipinternen Sicherheitseinrichtungen im spannungslosen Zustand nicht aktiviert sind.

Änderbare Dateninhalte wie beispielsweise der aktuelle Geldbetrag werden nach jeder Transaktion in das EEPROM geschrieben. Wird in diesem Moment die Karte gezogen, ist unter Umständen der Dateninhalt in einem unplausiblen Zustand und die Chipkarte defekt.

Bisherige Lade- und Entladeterminals bieten dem Kunden in der Regel eine komfortable Benutzerschnittstelle mit Tastatur und Display, die allerdings auf vielfältige Art durch Vandalismus zerstört werden kann. Auch der Chipkartenleser kann relativ einfach durch eingeschobene Gegenstände verstopft werden. Dadurch werden kostenintensive Servicegänge notwendig.

Alternativ zu den Anwendungen auf Chipkarten existieren bereits kontaktlose Anwendungen, die allerdings hauptsächlich als Zugangskontrolle z.B. für Skilifte eingesetzt werden. Diese kontaktlosen Chips werden in einigen Fällen bereits in Armbanduhren eingesetzt. Beide Funktionen "Zugangskontrolle" und "Uhr" arbeiten getrennt voneinander.

Ein kontaktloses Verfahren zum Austausch von Daten zwischen einer Armbanduhr und einem Chipkartenlesegerät wurde als Patent (US Patent Nr. 241 161) in allgemeiner Form veröffentlicht. Die Ansprüche betreffen dabei hauptsächlich die Art der kontaktlosen Übertragung, wie beispielsweise das Senden und Empfangen von Daten unter anderem auf optischem Wege mittels Photodetektor und LCD Display, sowie die interne Datenverarbeitung mittels festgelegter Algorithmen, gegebenenfalls unter zu Hilfenahme intern generierter Zeitinformationen bzw. bereits gespeicherter Informationen.. Die Erfindung stellt sich die Aufgabe, ein elektronisches Zahlungssystem anzubieten, dass gegenüber den bekannten Verfahren eine wesentlich höhere Sicherheit bietet und hinsichtlich Verfügbarkeit und Handhabung sehr einfach und vorteilhaft ist.

Die Aufgabe wird dadurch gelöst, dass als elektronische Geldbörse ein Chip verwendet wird, der für eine kontaktlose Datenübertragung zu den Lade- und Bezahlterminals ausgelegt ist und zusätzlich zum Uhrenmodul in eine Armbanduhr eingebaut wird.
Das bedeutet, Uhrenmodul wie auch der Chip werden von der internen Batterie ständig mit Spannung versorgt. Die Kommunikation mit der elektronischen Geldbörse soll kontaktlos realisiert werden. Zusätzlich sollen Informationen aus der elektronischen Geldbörse an einem Display angezeigt werden, und die Transaktionen "Bezahlen" und "Laden" mit den Bedienelementen der Uhr gesteuert werden. Ein Zugriff auf die einzelnen Funktionsmodule soll durch eine mechanische Kapselung der Module verhindert werden.

Folgende Funktionen sind zu unterscheiden:
- Uhr (Funkuhr) mit Datumsanzeige und
- Elektronische Geldbörse

Aus dem Uhrenmodul (Empfang und Dekodierung der aktuellen Uhrzeit und Datum) kann ein Takt zur internen Steuerung der elektronischen Geldbörse abgeleitet werden.

Die Kommunikation zwischen elektronischer Geldbörse und den Terminals für Lade- und Bezahlvorgang wird kontaktlos über Antenne und Koder/ Dekoder realisiert. Jede Transaktion erfordert einen Zugriff der elektronischen Geldbörse auf das Uhrenmodul, um das Datum und die aktuelle Uhrzeit abzufragen.

Auf dem Display erscheint die aktuelle Uhrzeit. Durch Betätigen eines Bedienelementes kann der aktuelle Geldbetrag abgerufen und angezeigt werden. Zusätzlich speichert die elektronische Geldbörse die Journaldaten der letzten x Transaktionen, die dann entweder am Display angezeigt bzw. über eine kontaktlose Schnittstelle ausgelesen werden können. Diese Daten könnten beispielsweise optional in einem PC Software als "elektronisches Haushaltsbuch" verarbeitet werden.

### Ablauf eines Bezahlvorganges

Der Abbuchungsbetrag wird über die kontaktlose Schnittstelle zur elektronischen Geldbörse übertragen und erscheint auf dem Display. Nach Bestätigung durch Betätigen eines Bedienelementes an der Armbanduhr erfolgt die Abbuchung des Geldbetrages. Dadurch sind am Entladeterminal keinerlei Bedienelemente erforderlich. Gleichzeitig kann ausgeschlossen werden, dass Geldbeträge "zufällig" an elektronischen Geldbörsen von Dritten abgebucht werden.

Zusätzlich sollte es möglich sein, auch weitere Displayanzeigen beispielsweise für den Alt-Betrag (vor dem Abbuchen) und den Neu-Betrag (nach dem Abbuchen) anzuzeigen, die durch den Kunden ggf. deaktiviert werden können. (Sicherheitsmerkmal, um den verbleibenden Geldbetrag ggf. gegenüber Dritten geheim zu halten).

Die erfolgreiche bzw. nicht erfolgreiche Transaktion wird dem Händler eindeutig durch das Entladeterminal signalisiert.

### Ablauf eines Ladevorganges

Die elektronische Geldbörse soll an einem Ladeterminal kontaktlos nach Authentifikation des Anwenders, z.B. durch PIN-Eingabe, aufgeladen werden. Auch hier sollen die vorhandenen Bedienelemente der Uhr genutzt werden, damit wie beim Bezahlvorgang die Transaktion durch eine eindeutige Willenserklärung bestätigt wird.

### Kommunikation zwischen Lade- bzw. Bezahlterminal und elektronischer Geldbörse

Die Datenübertragung für Lade-/ Entladevorgang wird kryptografisch gesichert mittels symmetrischen oder asymmetrischen Algorithmus durchgeführt. Datum und Uhrzeit dienen zusätzlich als variable Eingangsdaten bei der Generierung von Zufallszahlen für die kryptografischen Verfahren.
Bei den Lade- und Bezahlvorgängen entstehen Buchungsdatensätze, die zur Verrechnung von den Terminals an ein Hintergrundsystem weitergeleitet werden.

### Sicherheitsfunktionen

Im Gegensatz zu allen bestehenden elektronischen Geldbörsen (PayCard, Geldkarte etc.) besitzt dieses Produkt keinen passiven (spannungsfreien) Zustand. Die eingebaute Batterie versorgt die einzelnen Module, also auch die elektronische Geldbörse, ständig mit Spannung. Dadurch können alle sicherheitsrelevanten Inhalte wie beispielsweise Sicherheitsalgorithmen oder geheime Schlüssel für die Anwendung flüchtig in einem RAM Baustein gespeichert werden und sind nach Unterbrechung der Spannung gelöscht. Eine Ausnahme bildet der Personalisierungsschlüssel, der nicht löschbar gespeichert jede Personalisierung (Erst- oder Folgepersonalisierung) kryptografisch absichert, um zu vermeiden, dass Fremdsoftware in das Börsenmodul geladen wird.

Eingebaute Sensoren überwachen ständig, ob an einzelnen Modulen manipuliert wird. Der Mikrocontroller reagiert in geeigneter Weise auf eine "positive" Sensormeldung z.B. so, dass alle geheimen Daten gelöscht werden. Zusätzlich sind alle sicherheitsrelevanten Module ggf. mit zusätzlichem aktivem "Shielding" gekapselt, so dass es nicht möglich ist, an den Schnittstellen der internen Module zu manipulieren oder Messungen vorzunehmen. Auch ein Öffnen des Batteriefaches ist verbunden mit dem Löschen der sicherheitsrelevanten Daten. Nach einem Batteriewechsel durch den Vertreiber ist ein Nachpersonalisieren mit Hilfe des gespeicherten Personalisierungsschlüssels erforderlich.

Die Wahrscheinlichkeit, dass ein Chipbruch auftritt, ist eher gering, da keine mechanischen Beanspruchungen direkt auf den Chip einwirken können.

Die elektronische Geldbörse kann intern aus dem Uhrenmodul das aktuelle Datum und die Uhrzeit abfragen, und beides in einen Buchungsdatensatz einsetzen. Darüber hinaus prüft die Börsenapplikation selbst ihre Gültigkeitsdauer und löscht nach Ablauf der Gültigkeit alle gespeicherten sicherheitsrelevanten Informationen, z.B. Schlüssel etc. Der Anwender wird über entsprechende Displayanzeigen rechtzeitig über den Ablauf der Gültigkeitsdauer informiert.

Die bei EEPROM Zellen langen Schreibzyklen entfallen systembedingt, da die Daten der elektronischen Geldbörse im RAM gespeichert werden können. Die Applikation arbeitet dadurch schneller. Es können keine unvollständigen Schreibzyklen auftreten, die zu einem "pageweisen" Kippen auf logisch "0" oder "1" fuhren und eine Chipkarte zerstören würden. Für die Beweissicherung werden nicht sicherheitsrelevante Daten, z.B. der aktuelle Geldbetrag, zeitversetzt im EEPROM gesichert.

### Vorteile der Erfindung gegenüber der elektronischen Geldbörse als Chipkarte

a) Es wird kein zusätzliches Lesegerät benötigt, um den Geldbetrag anzuzeigen. Dies kann mittels dem eingebauten Display in der Uhr erfolgen. Dies wiederum steigert die Nutzung, da jederzeit der gespeicherte Geldbetrag abgerufen werden kann.
b) Die Zahlungsfunktionalität wird erstmals in ein bestehendes System, in diesem Fall eine Armbanduhr, integriert, das bereits eine sehr hohe Akzeptanz besitzt.
c) Die Steuerung des Bezahlvorgangs an einem Akzeptanzterminal (z.B. Warenautomat) erfolgt ausschließlich mit den Bedienelementen an der Uhr. Der Anwender muss sich somit nicht mit unterschiedlichen Bedienungsabläufen verschiedener Terminalhersteller befassen. Zusätzlich entfallen für den Terminalbetreiber die Kosten für zusätzliche Servicegänge, die aufgrund von Vandalismus (z.B. Kartenleser verstopft, Tastatur defekt etc.) entstehen.
d) Die elektronische Geldbörse wird ständig mit Spannung versorgt. Die Sicherheitssensoren können vom Mikrocontroller permanent überwacht werden. Im "Fehlerfall" können die entsprechenden SW Routinen aufgerufen werden, da es keinen deaktivierten Zustand gibt. Sensitive Daten, wie z.B. geheime Schlüssel oder auch Sicherheitsalgorithmen können im RAM flüchtig gespeichert und im Bedarfsfall relativ schnell gelöscht werden. Die Möglichkeit geheime Daten durch Messungen unterschiedlichster Art an der Schnittstelle zum Chip auszuspähen, bzw. Manipulationen der Spannungen für die Versorgung (VCC), Reset, oder Clock sind praktisch nicht möglich, da sich die Geldbörsenapplikation in einer gekapselten Einheit befindet.
e) Die Börsenapplikation könnte die Daten, die nach einer Transaktion geändert werden müssen, zumindest temporär im RAM speichern und dann beispielsweise zeitversetzt im EEPROM sichern. Unterbrochene Schreibzugriffe führen bei Chipkarten häufig zu Defekten. Dies entfällt hier bei einer ständigen internen Spannungsversorgung zwangsläufig.
f) Die elektronische Geldbörse hat die Möglichkeit, das aktuelle Datum und die Uhrzeit aus dem Uhrenmodul abzufragen und bei einem Lade- bzw. Entladevorgang in den Buchungsdatensatz einzusetzen. Datum und Uhrzeit stellen gleichzeitig eine variable Größe dar, die als Eingangsdaten für die Generierung von Zufallszahlen genutzt werden können.
g) Die Gültigkeitsdauer der elektronischen Geldbörse kann aktiv durch den Mikrocontroller geprüft werden. Nach Ablauf der Gültigkeit können ggf. sicherheitsrelevante Daten gelöscht werden.

Die elektronische Geldbörse kann als echte "Geldbörsen-Applikation" wie beispielsweise die MFC PayCard oder Geldkarte realisiert sein. Alternativ wäre denkbar, die Chipfunktionalität nur zur Authenfizierung (Echtheitsprüfung) einzusetzen und die Verrechnung der Geldbeträge über das Hintergrundsystem abzuwickeln. Auswirkungen hätte dies vor allem auf die Entladeterminals, die dann für jede Transaktion einen Online - Zugriff benötigen, um den aktuellen Geldbetrag abzufragen.

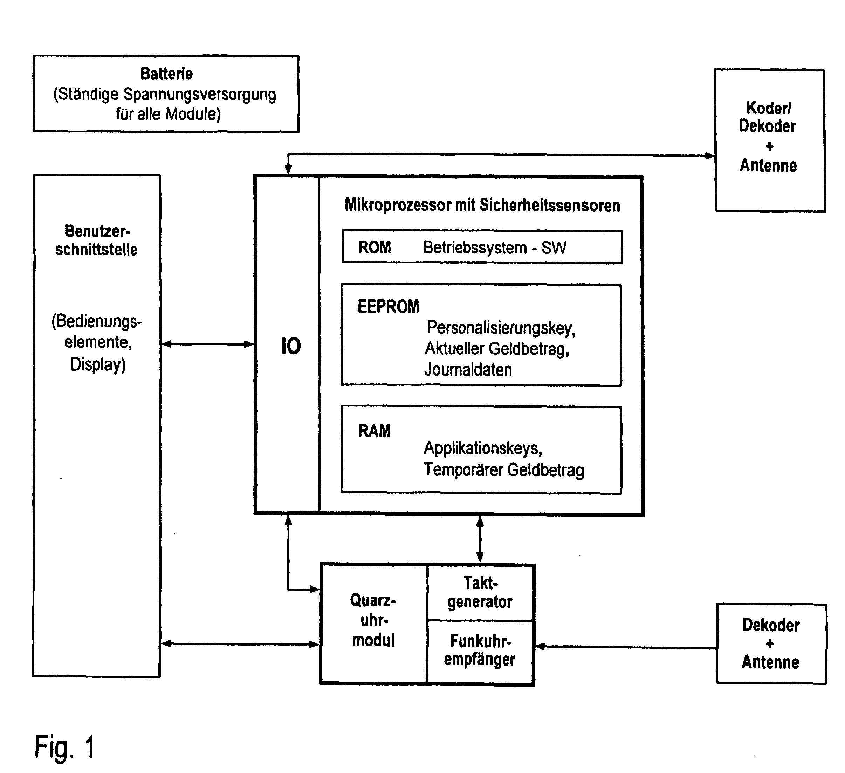

## Patentansprüche

1. Elektronisches Zahlungssystem mit hoher Sicherheit, bestehend aus elektronischer Geldbörse und Terminals für die Geldaufladung und den Bezahlvorgang,
**dadurch gekennzeichnet,**
- **dass** die Datenübertragung für den Auflade- und Bezahlvorgang zwischen elektronischer Geldbörse und den Terminals kontaktlos erfolgt,
- **dass** die elektronische Geldbörse aus einem Chip für kontaktlose Datenübertragung besteht, der zusätzlich zum Uhrenmodul in eine Armbanduhr eingebaut wird,
- **dass** der Chip die Versorgungsspannung von der Uhrenbatterie erhält,
- **dass** die Armbanduhr als Funkuhr ausgelegt ist und mit einem Display für die Anzeige ausgestattet ist,
- **dass** die Lade- und Buchungsvorgänge von Bedienelementen an der Armbanduhr gesteuert werden,
- **dass** Datum und Uhrzeit der internen Uhr in die Buchungsdatensätze eingefügt werden und für die Überwachung zeitrelevanter Vorgänge (Gültigkeit) genutzt werden können,
- **dass** die sicherheitsrelevanten Daten auf Grund der stetigen Spannungsversorgung flüchtig gespeichert werden können und bei Auflauf der Gültigkeit bzw, anderen funktionalen Unterbrechungen automatisch gelöscht werden,
- **dass** Sensoren die internen Module und ihre Schnittstellen überwachen und bei versuchter Manipulation alle geheimen Daten gelöscht werden, und
- **dass** ein Personalisierungschlüssel nicht flüchtig gespeichert wird, um die elektronische Geldbörse gegen Fremdeinladungen zu schützen.

2. Elektronisches Zahlungssystem gemäß Anspruch 1, **dadurch gekennzeichnet, dass** die Datenübertragung für Lade- und Bezahlvorgang kryptografisch mittels symmetrischen oder asymmetrischen Algorithmus gesichert wird.

3. Elektronisches Zahlungssystem gemäß Anspruch 1 und 2, **dadurch gekennzeichnet, dass** Datum und Uhrzeit als variable Eingangsdaten für die Generierung von Zufallsdaten für die kryptografischen Verfahren verwendet werden.

## Claims

1. Electronic payment system with high security, consisting of electronic wallet and terminals for cash loading and payment transactions,
**characterized in that**
- data transfer for cash loading and payment transactions between electronic wallet and the terminals is accomplished in contactless manner;
- the electronic wallet consists of a chip for contactless data transfer, said chip being installed in a wrist watch in addition to the watch module;
- the chip receives its power supply from the watch battery;
- the wrist watch is in the form of a radio-controlled watch and is equipped with a display for indication purposes;
- the loading and booking transactions are controlled from control elements on the wrist watch;
- the date and time of the internal clock are inserted into the booking data records and can be used for the monitoring of time-relevant transactions;
- the security-relevant data can be stored in volatile manner owing to the constant power supply and are automatically erased upon expiration of validity or in the case of other functional interruptions;
- sensors monitor the internal modules and their interfaces and all secret data are erased in the case of attempted manipulation; and
- a personalization key is stored in non-volatile manner in order to protect the electronic wallet against loading of any external software.

2. Electronic payment system according to claim 1, **characterized in that** data transfer for loading and payment transactions is secured cryptographically by means of a symmetrical or asymmetrical algorithm.

3. Electronic payment system according to claims 1 and 2, **characterized in that** the date and time are used as variable input data for generating random data for the cryptographic methods.

## Revendications

1. Système de paiement électronique de haute sécurité, constitué d'un porte-monnaie électronique et de terminaux pour le chargement d'argent et les opérations de paiement,
**caractérisé en ce que**
- la transmission de données pour l'opération de chargement et de paiement se fait sans contact entre le porte-monnaie électronique et les terminaux,
- le porte-monnaie électronique est constitué d'une puce pour transmission de données sans contact, qui, en plus du module horloge, est intégrée dans une montre-bracelet,
- la puce reçoit la tension d'alimentation de la batterie de la montre,
- la montre-bracelet est une montre radio munie d'un écran de visualisation,
- les opérations de chargement et de comptabilisation sont commandées par des dispositifs de commande se trouvant sur la montre-bracelet,
- la date et l'heure de l'horloge interne sont intégrées dans les enregistrements de données de comptabilisation et peuvent être utilisées pour le contrôle de processus à incidence de temps,
- les données relatives à la sécurité peuvent être enregistrées passagèrement en raison de l'alimentation permanente en tension et sont automatiquement effacées à expiration de la validité ou lors d'autres interruptions fonctionnelles,
- des senseurs surveillent les modules internes et leurs interfaces, toutes les données secrètes étant effacées en cas de tentative de manipulation, et
- une clé personnalisée n'est pas enregistrée passagèrement, afin de protéger le porte-monnaie électronique de tout chargement de logiciel externe.

2. Système de paiement électronique selon la revendication 1, **caractérisé en ce que** la transmission de données pour les processus de chargement et de paiement est sécurisée cryptographiquement par algorithme symétrique ou asymétrique.

3. Système de paiement électronique selon les revendications 1 et 2, **caractérisé en ce que** la date et l'heure sont utilisées comme données d'entrée variables pour la génération de données aléatoires pour les procédés cryptographiques.
